# EUROPEAN PATENT SPECIFICATION

(11) **EP 4 175 398 B1**
(45) Date of publication and mention of the grant of the patent: **06.08.2025**
(21) Application number: 21922395.5
(22) Date of filing: 22.10.2021
(51) Int. Cl.: H04W 76/10

(54) **DATA TRANSMISSION METHODS, ELECTRONIC DEVICE AND STORAGE MEDIUM**
DATENÜBERTRAGUNGSVERFAHREN, ELEKTRONISCHE VORRICHTUNG UND SPEICHERMEDIUM
PROCÉDÉS DE TRANSMISSION DE DONNÉES, DISPOSITIF ÉLECTRONIQUE ET SUPPORT D'ENREGISTREMENT

(30) Priority: 26.01.2021 WO PCT/CN2021/073853; 06.08.2021 WO PCT/CN2021/111173
(43) Date of publication of application: 03.05.2023
(73) Proprietor: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN)
(74) Representative: Manitz Finsterwald Patent- und Rechtsanwaltspartnerschaft mbB
(86) International application number: PCT/CN2021/125886
(87) International publication number: WO 2022/160804

(56) References cited:
- CN-A- 107 484 249
- CN-A- 111 466 151
- CN-A- 111 556 590
- CN-A- 111 565 443
- US-A1- 2015 327 323
- US-A1- 2020 053 768
- HUAWEI ET AL: "Consideration on the sidelink DRX for unicast", vol. RAN WG2, no. On-line; 20210125 - 20210205, 15 January 2021 (2021-01-15), XP051974627, Retrieved from the Internet <URL:https://ftp.3gpp.org/tsg_ran/WG2_RL2/TSGR2_113-e/Docs/R2-2101762.zip R2-2101762 Consideration on the sidelink DRX for unicast.docx> [retrieved on 20210115]
- HUAWEI ET AL: "Consideration on the sidelink DRX for unicast, groupcast and broadcast", vol. RAN WG2, no. electronic; 20201102 - 20201113, 23 October 2020 (2020-10-23), XP052362467, Retrieved from the Internet <URL:https://ftp.3gpp.org/tsg_ran/WG2_RL2/TSGR2_112-e/Docs/R2-2009413.zip R2-2009413 Consideration on the sidelink DRX for unicast, groupcast and broadcast.docx> [retrieved on 20201023]

## Description

### TECHNICAL FIELD

The present application relates to the technical field of sidelink transmission, in particular, to a data transmission method, an electronic device and a storage medium.

### BACKGROUND

In the New Radio-Vehicle to Everything (NR-V2X) system, how to effectively transmit data after a sending device receives a sidelink grant is a goal that has been pursued. 3GPP DRAFT R2-2009413 discusses consideration on the sidelink DRX for unicast, groupcast and broadcast. US 2020/053768 Al discloses method and apparatus of allocating resource for multiple device-to-device resource pools in a wireless communication system. 3GPP DRAFT R2-2100762 discusses the slice based cell selection and reselection.

### SUMMARY

The present invention is set out in the appended set of claims. Embodiments of the present application provide a data transmission method, an electronic device and a storage medium, which can realize effective data transmission.

### BRIEF DESCRIPTION OF DRAWINGS

FIG. 1 is a schematic flowchart of selecting a transmission resource in a first mode of the present application.
FIG. 2 is a schematic flowchart of selecting a transmission resource in a second mode of the present application.
FIG. 3 is an optional schematic processing flowchart of a data transmission method provided by an embodiment of the present application.
FIG. 4 is a schematic diagram of a sending device sending a MAC PDU in an embodiment of the present application.
FIG. 5 is another optional schematic processing flowchart of a data transmission method provided by an embodiment of the present application.
FIG. 6 is yet another optional schematic processing flowchart of a data transmission method provided by an embodiment of the present application.
FIG. 7 is an optional schematic composition structural diagram of a sending device provided by an embodiment of the present application.
FIG. 8 is an optional schematic composition structural diagram of a receiving device provided by an embodiment of the present application.
FIG. 9 is another optional schematic composition structural diagram of the sending device provided by an embodiment of the present application.
FIG. 10 is a schematic hardware composition structural diagram of an electronic device provided by an embodiment of the present application.

### DESCRIPTION OF EMBODIMENTS

In order to understand characteristic and technical content of embodiments of the present application in more detail, the implementation of the embodiments of the present application is described in detail below in combination with drawings, the drawings are for reference only and are not intended to define the embodiments of the present application.

Before describing the embodiments of the present application, a brief description of relevant content is given.

Device to device (D2D) communication is a transmission technology based on sidelink (SL), it is different from the traditional cellular system in which communication data is received or sent through a network device, and thus has higher spectral efficiency and lower transmission delay. The Internet of vehicles system adopts the D2D communication mode (i.e. the device to device direct communication mode). For the D2D communication, the third generation partnership project (3GPP) defines two transmission modes: a first mode (also called mode A) and a second mode (also called mode B). The first mode is that a network device allocates a transmission resource to a terminal device, and the second mode is that a terminal device selects a transmission resource independently.

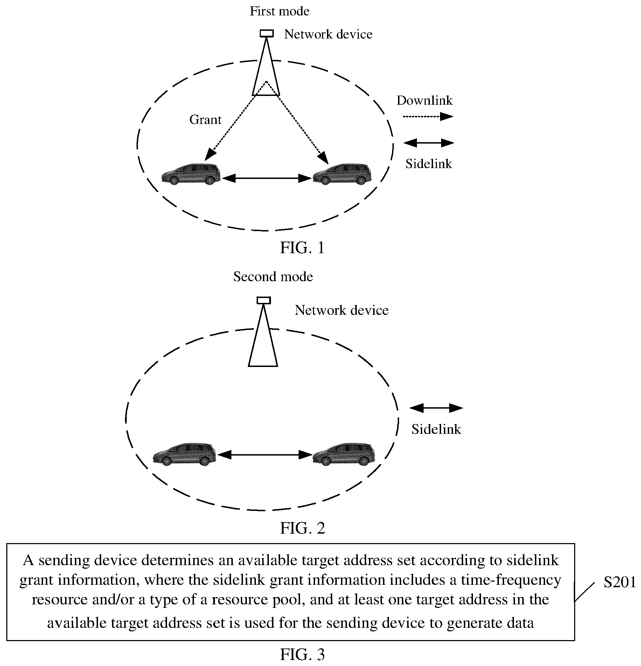

For the first mode: as shown in FIG. 1, the transmission resource of the terminal device is allocated by the network device, and the terminal device sends data on the sidelink according to the resource allocated by the network device; the network device can allocate a resource for a single transmission for the terminal device, and also can allocate a semi-static transmission resource for the terminal device.

For the second mode: as shown in FIG. 2, the terminal device selects a transmission resource in a resource pool to send data.

In the NR-V2X system, the terminal device may be in the first mode or the second mode; the terminal device may also be in a mixed mode, that is, the terminal device can acquire the transmission resource through the first mode, or simultaneously acquire the transmission resource through the second mode. The way for acquiring the transmission resource by the terminal device may be indicated by the network device through a sidelink grant, for example, the network device indicates time-frequency positions of a corresponding physical sidelink control channel (PSCCH) and a corresponding physical sidelink shared channel (PSSCH) through the sidelink grant, where a resource pool (RP) configuration in the NR-V2X system limits a time-frequency resource range of the sidelink communication.

The minimum granularity in a time domain configured by the resource pool in the LTE-V2X system is one subframe, and the minimum granularity in the time domain configured by the resource pool in the NR-V2X system is one time slot; the subframe or time slot contained in the resource pool is indicated by radio resource control (RRC) signaling sent by the network device in the form of bitmap, so that the terminal device can flexibly select a position of the time slot or subframe in the resource pool. The minimum granularity in a frequency domain of the resource pool is one sub-channel, which contains continuous multiple physical resource blocks (PRB) in the frequency domain. In the LTE-V2X, the minimum subchannel contains 4 consecutive PRBs, and the maximum subchannel contains 100 consecutive PRBs (corresponding to the maximum channel bandwidth of 20MHz). Since the LTE-V2X system adopts single-carrier frequency-division multiple access (SC-FDMA), the number of PRBs in the subchannel needs to be divisible by 2, 3, or 5. One subchannel in the NR-V2X can be 10, 12, 15, 20, 25, 50, 75, or 100 PRBs. Since the NR-V2X only supports cyclic prefix-orthogonal frequency division multiplexing (CP-OFDM), in order to reduce a peak to average power ratio (PAPR) of sidelink transmission, the subchannels in the resource pool must also be continuous in the frequency domain. In addition, a frequency domain resource contained in the resource pool should be within a range of one SL bandwidth part (BWP).

In the NR-V2X system, hybrid automatic repeat request (HARQ) retransmission based on feedback is also introduced, which is not limited to HARQ retransmission for unicast communication, but also includes the HARQ retransmission for multicast communication.

In the 3GPP version (Rel) 12/13, for proximity based service (ProSe), discontinuous sending and/or receiving of data by the terminal device on the sidelink can be realized by configuring a position of the resource pool in the time domain, for example, the resource pool being configured as discontinuous in the time domain, so as to achieve the effect of power saving.

In R14/15, the Internet of vehicles system has requirements for a scenario of vehicle-vehicle communication, which is mainly oriented to the relatively high-speed moving vehicle-vehicle and vehicle-person communication services.

In the V2X system, an on-board system has continuous power supply, so the main problem to be solved is the delay of data transmission. Therefore, from the perspective of system design, the terminal device is required to perform continuous sending and receiving.

In R14, studies have been conducted on a scenario in which a wearable device (FeD2D) accesses a network through a mobile phone, especially a scenario of low moving speed and low power access. For the FeD2D, the network device can configure a DRX parameter of a remote terminal through a relay terminal.

In the NR-V2X system, the terminal device will monitor a physical downlink control channel (PDCCH) discontinuously according to its DRX configuration to achieve the purpose of power saving. The terminal device will perform a corresponding DRX operation according to control information when the PDCCH carries a cell-radio network temporary identifier (C-RNTI), a cancellation indication-radio network temporary identifier (CI-RNTI), a configured scheduling-radio network temporary identifier (CS-RNTI), an interruption-radio network temporary identifier (INT-RNTI), a slot format indicator-radio network temporary identifier (SFI-RNTI), a semi-persistent-channel state information-radio network temporary identifier (SP-CSI-RNTI), a transmit power control-physical uplink control channel-radio network temporary identifier (TPC-PUCCH-RNTI), a transmit power control-physical uplink shared channel-radio network temporary identifier (TPC-PUSCH-RNTI), a transmit power control-sounding reference signal-radio network temporary identifier (TPC-SRS-RNTI) and an availability indication-radio network temporary identifier (AI-RNTI) which correspond to the terminal device. The network device controls a DRX behavior of the terminal device by configuring a series of parameters, the parameters configured by the network device may include: a discontinuous reception duration timer (drx-onDurationTimer), a discontinuous reception slot offset (drx-SlotOffset), a discontinuous reception inactivity timer (drx-InactivityTimer), a discontinuous reception retransmission downlink timer (drx-RetransmissionTimerDL), a discontinuous reception retransmission uplink timer (drx-RetransmissionTimerUL), a discontinuous reception long cycle start offset (drx-LongCycleStartOffset), a discontinuous reception short cycle (drx-ShortCycle (optional)), a short discontinuous reception cycle (the Short DRX cycle), a discontinuous receiving short cycle timer (drx-ShortCycleTimer (optional)), a hybrid automatic repeat request round-trip time downlink timer (HARQ-RTT-TimerDL), a discontinuous reception hybrid automatic repeat request round-trip time uplink timer (drx-HARQ-RTT-TimerUL), ps-Wakeup (optional), ps-TransmitOtherPeriodicCSI (optional) and ps-TransmitPeriodicL1-RSRP (optional).

Where the terminal device may be in a DRX active state or a wake-up state under the following conditions: 1) during a run-time of the drx-onDurationTimer or the drx-InactivityTimer; 2) during a run-time of the drx-RetransmissionTimerDL or the drx-RetransmissionTimerUL; 3) during a run-time of a ra-ContentionResolutionTimer or a msgB-ResponseWindow; 4) there is an unprocessed SR; 5) a PDCCH indicates a new transmission period.

In the prior art, after acquiring a sidelink grant, the terminal device can select a target identity according to certain rules, such as whether there is data transmission or a data priority, and then assemble and send MAC PDUs to the target identity according to an LCP criterion. However, after a power saving mechanism of the sidelink is introduced, a device corresponding to the target identity may be in a non-wake-up state and cannot receive data. Therefore, how to effectively transmit data by the sending device needs to be solved.

In the data transmission method provided by an embodiment of the present application, a sending device determines a target identity according to a time-frequency resource and/or a type of a resource pool included in sidelink grant information, so that data transmitted by the sending device can be effectively received by the receiving device.

An optional processing flow of the data transmission method provided by an embodiment of the present application, as shown in FIG. 3, includes the following steps:
step S201, a sending device determines an available target identity set according to sidelink grant information, where the sidelink grant information includes a time-frequency resource and/or a type of a resource pool, and at least one target identity in the available target identity set is used for the sending device to generate data.

The sending device determines the available target identity set according to the sidelink grant information and information of the data to be sent.

In some embodiments, the sending device may be a terminal device in a sidelink transmission system for sending data. The sending device may acquire the sidelink grant information through the first mode and/or the second mode, and the sidelink grant information may include the time-frequency resource and/or the type of the resource pool.

If there is no available target identity set in the time-frequency resource and/or the resource pool configured by the sidelink grant information, the sending device reports a first message to a network. Further, if the sidelink grant information is from the network, the first message is used to indicate that the sidelink grant resource configured by the network is unavailable and/or current target identities are in a DRX non-active state. Here, the current target identities refer to the target identities for sidelink communication with the sending device.

It should be noted that the sidelink grant resource refers to the time-frequency resource and/or the resource pool configured by the sidelink grant information.

In the above scheme, optionally, the first message may be physical layer signaling or a MAC CE or RRC signaling.

In an embodiment of the present application, if all the receiving devices (i.e. receiving UE (Rx UE)) are in an non-active state, they report to the network, the network can schedule for the sending device (i.e. sending UE (Tx UE)) until an on duration timer of the next Rx UE runs.

In some embodiments, the information of the data to be sent may include: a profile corresponding to the data to be sent, and the profile is used to indicate a version of an available protocol.

In the above scheme, the resource pool and the profile have a corresponding relationship, and the resource pool supports a profile which has a corresponding relationship with the resource pool. For example, the resource pool may be configured to support profile 1 or profile 2.

In the above scheme, optionally, the version of the protocol is used to indicate at least one of the following information: the service corresponds to a terminal device configured with DRX; the service corresponds to a terminal device not configured with DRX; the service corresponds to a terminal device configured with DRX and a terminal device not configured with DRX; a target identity corresponding to the service is an identity of a terminal device configured with DRX; and a target identity corresponding to the service is an identity of a terminal device not configured with DRX. Where the data to be sent may be data in a logical channel; the data generated by the sending device may be a MAC PDU.

It can be understood that the profile indicates a corresponding transmission format. If the version of the protocol indicated by the profile is R14, the terminal device transmits a corresponding data packet in a format available for R14; if the version of the protocol indicated by the profile is R15, the terminal device transmits a corresponding data packet in a format available for R15. For example, the profile is used to indicate that the version of the protocol is R17, and a DRX mechanism has been introduced into the R17 protocol, then it is necessary to consider that the service is sent to the receiving device configured with a DRX mechanism if transmitting the service if the version of the protocol indicated by the profile corresponding to the service is R17.

In some embodiments, the time-frequency resource may be a time-frequency resource of a PSCCH and a time-frequency resource of a corresponding PSSCH. The type of the resource pool may include: a shared resource pool and a non-shared resource pool; where the shared resource pool may mean that the transmission resource in the shared resource pool is used for the terminal device configured with DRX and the terminal device not configured with DRX, that is, the terminal device configured with DRX (i.e. DRX terminal device) shares the transmission resource in the resource pool with the terminal device not configured with DRX.

The non-shared resource pool may mean that the transmission resource in the non-shared resource pool is used for the terminal device configured with DRX and the terminal device not configured with DRX; or the transmission resource in the non-shared resource pool is used for the terminal device configured with DRX; or the transmission resource in the non-shared resource pool is used for the terminal device not configured with DRX; that is, the resource in the non-shared resource pool is only used for the terminal device configured with DRX, or the resource in the non-shared resource pool is only used for the terminal device not configured with DRX, or the resource in the non-shared resource pool is used for the terminal device configured with DRX and the terminal device not configured with DRX.

In the following, different types of the resource pool will be described.
1) If the type of the resource pool is the shared resource pool, a target identity determined by the sending device is an identity corresponding to a terminal device not configured with DRX; or a target identity determined by the sending device is an identity corresponding to a DRX terminal device which is in a wake-up state at the time-frequency resource.

It can be understood that if the terminal device corresponding to the target identity is not configured with DRX, the terminal device is in a state of continuously receiving data, and the data transmitted by the sending device on a sidelink transmission resource can be received by the terminal device. If the terminal device corresponding to the target identity is the terminal device configured with DRX, and the terminal device is in the wake-up state, the data transmitted by the sending device on the sidelink transmission resource can also be received by the terminal device.

In some embodiments, the target identity may also include at least one media access control control element and/or logical channel with the highest priority meeting a condition. Where the condition may include at least one of the following: sidelink data is available for transmission (SL data is available for transmission); as long as there is any logical channel SBj>0 (*SBj >* 0, in case there is any logical channel having *SBj >* 0); a configured grant type 1 for the sidelink is allowed, if it is configured, the configured grant type 1 for the sidelink is set to true (sl-configuredGrantType1Allowed, if configured, is set to true in case the SL grant is a Configured Grant Type 1); a configured grant list for the sidelink is allowed, if it is configured, it includes a configuration grant index associated with the sidelink grant (sl-AllowedCG-List, if configured, includes the configured grant index associated to the SL grant); if a PSFCH corresponding to a sidelink grant associated with SCI is set to no feedback (sl-HARQ-FeedbackEnabled is set to disabled, if PSFCH is not configured for the SL grant associated to the SCI).

In this scenario, the data transmission method may also include: configuring the type of the resource pool as a shared resource pool, that is, the terminal device configured with DRX shares the resource pool with the terminal device not configured with DRX.

2) If the type of the resource pool is the non-shared resource pool and the non-shared resource pool only supports a service of a DRX terminal device, a target identity determined by the sending device is an identity corresponding to the DRX terminal device which is in a wake-up state at the time-frequency resource.

It can be understood that if the type of the resource pool is the non-shared resource pool and the non-shared resource pool only supports the service of the DRX terminal device, the data transmitted by the sending device on the sidelink transmission resource can be received by the DRX terminal device in the wake-up state, but cannot be received by the terminal device not configured with DRX, nor can such data be received by the DRX terminal device in a sleep (non-wake-up) state.

In some embodiments, the target identity may also include at least one media access control control element and/or logical channel with the highest priority meeting a condition. Where the condition may include at least one of the following: SL data is available for transmission; *SBj >* 0, in case there is any logical channel having *SBj >* 0; sl-configuredGrantType1Allowed, if configured, is set to true in case the SL grant is a Configured Grant Type 1; sl-AllowedCG-List, if configured, includes the configured grant index associated to the SL grant; sl-HARQ-FeedbackEnabled is set to disabled, if PSFCH is not configured for the SL grant associated to the SCI.

3) If the type of the resource pool is the non-shared resource pool and the non-shared resource pool supports a service of a DRX terminal device and a service of a terminal device not configured with DRX, a target identity determined by the sending device is an identity corresponding to the terminal device not configured with DRX; or the target identity is an identity corresponding to the DRX terminal device which is in the wake-up state at the time-frequency resource.

It can be understood that if the type of the resource pool is the non-shared resource pool and the non-shared resource pool supports the service of the DRX terminal device and the service of the terminal device not configured with DRX, the data transmitted by the sending device on the sidelink transmission resource can be received by the DRX terminal device in the wake-up state, or by the terminal device not configured with DRX.

In some embodiments, the target identity may also include at least one media access control control element and/or logical channel with the highest priority meeting a condition. Where the condition may include at least one of the following: SL data is available for transmission; *SBj >* 0, in case there is any logical channel having *SBj >* 0; sl-configuredGrantType1Allowed, if configured, is set to true in case the SL grant is a Configured Grant Type 1; sl-AllowedCG-List, if configured, includes the configured grant index associated to the SL grant; sl-HARQ-FeedbackEnabled is set to disabled, if PSFCH is not configured for the SL grant associated to the SCI.

4) If the type of the resource pool is the non-shared resource pool and the non-shared resource pool only supports a service of a terminal device not configured with DRX, the target identity is an identity corresponding to the terminal device not configured with DRX.

It can be understood that if the type of the resource pool is the non-shared resource pool and the non-shared resource pool only supports the service of the terminal device not configured with DRX, the data transmitted by the sending device on the sidelink transmission resource can be received by the terminal device not configured with DRX.

In some embodiments, the target identity may also include at least one media access control control element and/or logical channel with the highest priority meeting a condition. Where the condition may include at least one of the following: SL data is available for transmission; *SBj >* 0, in case there is any logical channel having *SBj >* 0; sl-configuredGrantType1Allowed, if configured, is set to true in case the SL grant is a Configured Grant Type 1; sl-AllowedCG-List, if configured, includes the configured grant index associated to the SL grant; sl-HARQ-FeedbackEnabled is set to disabled, if PSFCH is not configured for the SL grant associated to the SCI.

In the embodiments of the present application, the service corresponding to the DRX terminal device may refer to that the service is for the terminal device configured with DRX; the service corresponding to the terminal device not configured with DRX may refer to that the service is for the terminal device not configured with DRX; the service corresponding to the terminal device configured with DRX and the terminal device not configured with DRX, may refer to that the service is for the terminal device not configured with DRX and the terminal device configured with DRX; if the service corresponds to the terminal device configured with DRX and the terminal device not configured with DRX, the service may be transmitted by way of multicast or broadcast.

In some embodiments, the data transmission method may further include:
step S202, the sending device transmits the data to a device corresponding to the target identity.

In some embodiments, after determining the target identity, the sending device selects a logical channel that meets a condition in the target identity according to an LCP criterion, and generates data (such as a MAC PDU) to be sent to the target identity.

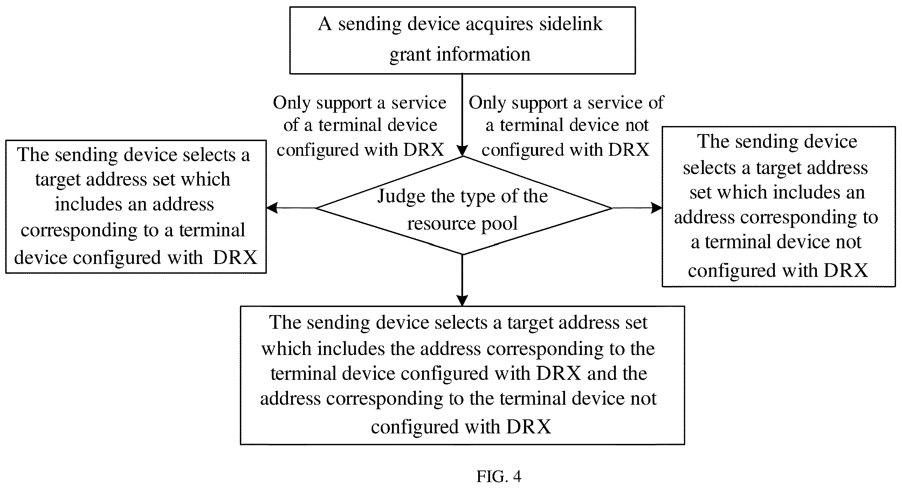

In the embodiments of the present application, a process of a sending device selecting a logical channel for sending a MAC PDU may be shown in FIG. 4. The sending device acquires sidelink grant information, and the sending device judges a type of a resource pool; if the type of the resource pool is a non-shared resource pool and the non-shared resource pool only supports a service of a terminal device not configured with DRX, the sending device selects a target identity set which includes an identity corresponding to the terminal device not configured with DRX. If the type of the resource pool is the non-shared resource pool and the non-shared resource pool only supports a service of a terminal device configured with DRX, the sending device selects a target identity set which includes an identity corresponding to the terminal device configured with DRX. If the type of the resource pool is the shared resource pool and the shared resource pool supports the service of the terminal device configured with DRX and the service of the terminal device not configured with DRX, the sending device selects a target identity set which includes the identity corresponding to the terminal device configured with DRX and the identity corresponding to the terminal device not configured with DRX. Finally, the sending device selects the logical channel among the selected identities to send the MAC PDU.

In the embodiment of the present application, a sending device determines an available target identity set according to a type of a resource pool and/or a time-frequency resource of a sidelink. If the sending device transmits data to the determined target identity on the time-frequency resource, a device corresponding to the target identity can effectively receive the data, thereby realizing effective transmission of the sidelink data. For example, if the sending device determines that the device (the receiving device) corresponding to the target identity is a DRX terminal, the receiving device detects sidelink control information in the wake-up state or the active state to receive the data, thus avoiding the problem that the receiving device is unable to receive data which is caused by transmitting the data by the sending device when the receiving device is in the sleep or deactive state, thereby improving the transmission efficiency of the data.

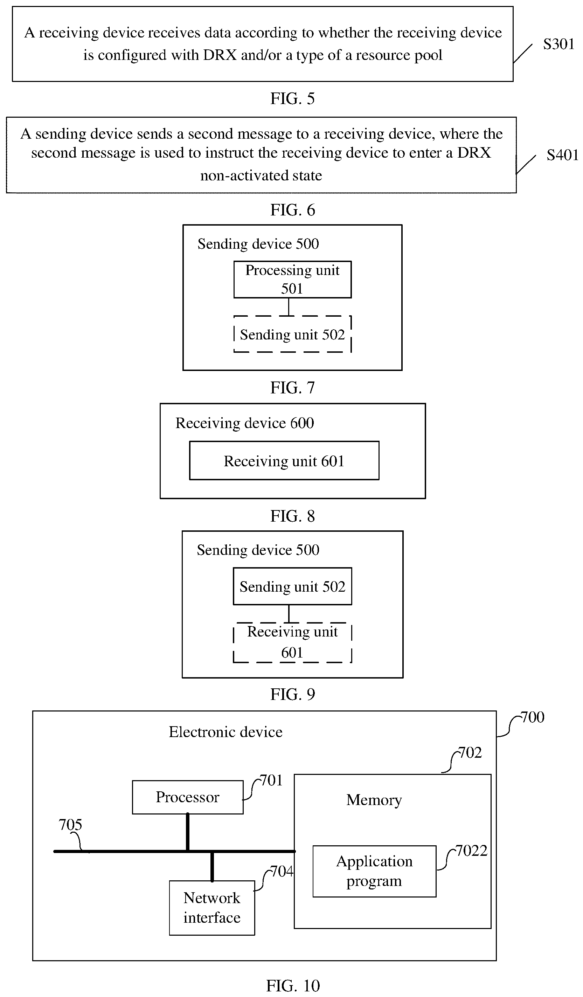

Another optional processing flow of the data transmission method provided by an embodiment of the present application, as shown in FIG. 5, includes the following steps:
step S301, a receiving device receives data according to whether the receiving device is configured with DRX and/or a type of a resource pool.

In some embodiments, whether the receiving device is configured with DRX may include: the receiving device being configured with DRX or the receiving device being not configured with DRX; if the receiving device is configured with DRX, the receiving device is a DRX device.

In some embodiments, the type of the resource pool may include a shared resource pool or a non-shared resource pool.

In the following, whether the receiving device is configured with DRX and the types of the resource pool will be described.
1) If the type of the resource pool is the shared resource pool and the receiving device is configured with DRX, the receiving device receives, in the wake-up state, sidelink data transmitted by the sending device, and the receiving device does not receive the sidelink data in the non-wake-up state or the non-active state; that is, the receiving device detects sidelink control information in the active state to receive the sidelink data, and does not detect the sidelink control information in the non-wake-up state or the non-active state.
2) If the type of the resource pool is the shared resource pool and the receiving device is not configured with DRX, the receiving device continuously receives data, that is, the receiving device always detects sidelink control information to receive the sidelink data.
3) If the type of the resource pool is the non-shared resource pool, and the non-shared resource pool supports a service of a DRX terminal device and a service of a terminal device not configured DRX, the receiving device receives data in the wake-up state, or the receiving device continuously receives the data. That is, the receiving device configured with DRX detects sidelink control information in the wake-up state to receive the sidelink data, and the receiving device not configured with DRX continuously detects the sidelink control information to receive the sidelink data.
4) If the type of the resource pool is the non-shared resource pool, and the non-shared resource pool only supports the service of the DRX terminal device and the receiving device is configured with DRX, the receiving device receives the data in the wake-up state; that is, the receiving device detects the sidelink control information in the active state to receive the sidelink data.
5) If the type of the resource pool is the non-shared resource pool, and the non-shared resource pool only supports the service of the terminal device not configured with DRX and the receiving device is not configured with DRX, the receiving device continuously receives the data. That is, the receiving device not configured with DRX continuously detects the sidelink control information to receive the sidelink data.

In some embodiments, the sending device and the receiving device may be terminal devices in the sidelink transmission.

In the embodiment of the present application, a sending device determines an available target identity set according to a type of a resource pool and/or a time-frequency resource of a sidelink, so that if the sending device transmits data to the determined target identity on the time-frequency resource, a device corresponding to the target identity can effectively receive the data, thereby realizing effective transmission of the sidelink data. For example, if the sending device determines that the device (the receiving device) corresponding to the target identity is a DRX terminal, the receiving device detects sidelink control information in the wake-up state or the active state to receive the data, thus avoiding the problem that the receiving device is unable to receive data which is caused by transmitting the data by the sending device when the receiving device is in the sleep or deactive state, thereby improving the transmission efficiency of the data.

Another optional processing flow of the data transmission method provided by an embodiment of the present application, as shown in FIG. 6, includes the following steps:
step S401, a sending device sends a second message to a receiving device, where the second message is used to instruct the receiving device to enter a DRX non-active state.

Specifically, the sending device sends the second message to at least one target identity, each target identity in the at least one target identity corresponds to an identity of a terminal device.

In some optional embodiments, before the sending device sends the second message to the at least one target identity, the sending device receives indication information sent by a network, where the indication information is used to instruct the sending device to send the second message to the at least one target identity.

In some optional embodiments, after the sending device sends the second message to the at least one target identity, the sending device sends a notification message to the network, where the notification message is used to report to the network that the terminal device corresponding to the at least one target identity has entered the DRX non-active state.

In the above scheme, optionally, the second message is a MAC CE. For the MAC CE in the sidelink DRX (SL DRX), if the sending device (i.e. TX UE) is in a connected state and/or the first mode, a transmission resource configuration of the sending device is from the network, so the transmission of the MAC CE can be controlled by the network, that is, the network indicates whether the sending device sends the MAC CE. Further, optionally, the sending device reports the notification message to the network after sending the MAC CE.

In order to realize the data transmission method provided by the embodiments of the present application, an embodiment of the present application further provides a sending device. The optional composition structure of the sending device 500, as shown in FIG. 7, includes:
a processing unit 501, configured to determine an available target identity set according to sidelink grant information, wherein the sidelink grant information includes a time-frequency resource and/or a type of a resource pool, and at least one target identity in the available target identity set is used for the sending device to generate the data.

In some embodiments, the available target identity set includes an identity corresponding to a terminal device not configured with discontinuous reception DRX; or
the available target identity set includes an identity corresponding to a DRX terminal device in a wake-up state at the time-frequency resource.

In some embodiments, the sending device further includes:
a sending unit 502, configured to report a first message to the network if there is no available target identity set in the time-frequency resource and/or the resource pool configured by the sidelink grant information.

In some embodiments, if the sidelink grant information is from a network, the first message is used to indicate that a sidelink grant resource configured by the network is unavailable and/or current target identities are in a DRX non-active state. Here, the current target identity refers to the target identity for sidelink communication with the sending device.

In some embodiments, the first message is physical layer signaling or a MAC CE or RRC signaling.

In some embodiments, the type of the resource pool is a shared resource pool.

In some embodiments, the type of the resource pool is a non-shared resource pool, and the non-shared resource pool supports a service of a DRX terminal device and a service of a terminal device not configured with DRX.

In some embodiments, the available target identity set includes an identity corresponding to a DRX terminal device in a wake-up state at the time-frequency resource.

In some embodiments, the type of the resource pool is a non-shared resource pool, and the non-shared resource pool only supports a service of a DRX terminal device.

In some embodiments, the available target identity set includes an identity corresponding to a terminal device not configured with DRX.

In some embodiments, the type of the resource pool is a non-shared resource pool, and the non-shared resource pool only supports a service of a terminal device not configured with DRX.

In some embodiments, a transmission resource in the shared resource pool is used for a terminal device configured with DRX and a terminal device not configured with DRX.

In some embodiments, a transmission resource in the non-shared resource pool is used for a terminal device configured with DRX and a terminal device not configured with DRX; or
a transmission resource in the non-shared resource pool is used for a terminal device configured with DRX; or
a transmission resource in the non-shared resource pool is used for a terminal device not configured with DRX.

In some embodiments, a profile corresponding to the data is determined by information of data to be sent, and the profile is used to indicate a version of an available protocol.

In some embodiments, the resource pool and a profile have a corresponding relationship, and the resource pool supports a profile corresponding to the resource pool.

In some embodiments, the version of the protocol is used to indicate at least one of the following information:
the service corresponds to a terminal device configured with DRX;
the service corresponds to a terminal device not configured with DRX;
the service corresponds to a terminal device configured with DRX and a terminal device not configured with DRX;
a target identity corresponding to the service is an identity of a terminal device configured with DRX; and
a target identity corresponding to the service is an identity of a terminal device not configured with DRX.

In some embodiments, the available target identity set includes at least one media access control control element and/or logical channel with a highest priority meeting a condition.

In some embodiments, the sending device 500 further includes:
a sending unit 502, configured to transmit the data to a device corresponding to the target identity.

In some embodiments, the data is sidelink data.

In order to realize the data transmission method provided by the embodiment of the present application, an embodiment of the present application further provides a receiving device. The optional composition structure of the receiving device 600, as shown in FIG. 8, includes:
a receiving unit 601, configured to receive data according to whether the receiving device is configured with discontinuous reception DRX and/or a type of a resource pool.

In some embodiments, the receiving unit 601 is configured to receive the data in a wake-up state if the type of the resource pool is a shared resource pool and the receiving device is configured with DRX.

In some embodiments, the receiving unit 601 is configured to continuously receive the data if the type of the resource pool is a shared resource pool and the receiving device is not configured with DRX.

In some embodiments, the receiving unit 601 is configured to receive the data in a wake-up state or continuously receives the data if the type of the resource pool is a non-shared resource pool, and the non-shared resource pool supports a service of a terminal device configured with DRX and a service of a terminal device not configured with DRX.

In some embodiments, the receiving unit 601 is configured to receive the data in a wake-up state if the type of the resource pool is a non-shared resource pool, and the non-shared resource pool only supports a service of a terminal device configured with DRX and the receiving device is configured with DRX.

In some embodiments, the receiving unit 601 is configured to continuously receive the data if the type of the resource pool is a non-shared resource pool, and the non-shared resource pool only supports a service of a terminal device not configured with DRX and the receiving device is not configured with DRX.

In some embodiments, the data is sidelink data.

It should be noted that in the embodiments of the present application, the function of the processing unit 501 can be realized by a processor, the function of the sending unit 502 can be realized by a transmitter or a transceiver, and the function of the receiving unit 601 can be realized by a receiver or a transceiver.

In order to realize the data transmission method provided by the embodiment of the present application, an embodiment of the present application further provides a sending device. The optional composition structure of the sending device 500, as shown in FIG. 9, includes:
a sending unit 502, configured to send a second message to a receiving device, where the second message is used to instruct the receiving device to enter a DRX non-active state.

In some embodiments, the sending unit 502 is configured to send the second message to at least one target identity, where each target identity in the at least one target identity corresponds to an identity of a terminal device.

In some embodiments, the sending device further includes:
a receiving unit 601, configured to receive indication information sent by a network, where the indication information is used to indicate the sending device to send the second message to the at least one target identity.

In some embodiments, the sending unit 502 is further configured to send a notification message to a network, where the notification message is used to report to the network that the terminal device corresponding to the at least one target identity has entered the DRX non-active state.

It should be noted that in the embodiments of the present application, the function of the sending unit 502 can be realized by a transmitter or a transceiver, and the function of the receiving unit 601 can be realized by a receiver or a transceiver.

An embodiment of the present application further provides a sending device, including a processor and a memory for storing a computer program that can run on the processor, where the processor is configured to run the computer program to execute steps of the data transmission method executed by the sending device.

An embodiment of the present application further provides a receiving device, including a processor and a memory for storing a computer program that can run on the processor, where the processor is configured to run the computer program to execute steps of the data transmission method executed by the receiving device.

An embodiment of the present application further provides a chip, including a processor, the processor is configured to call and run a computer program from a memory to cause a device on which the chip is installed to execute the data transmission method executed by the sending device.

An embodiment of the present application further provides a chip, including a processor, the processor is configured to call and run a computer program from a memory to cause a device on which the chip is installed to execute the data transmission method executed by the receiving device.

An embodiment of the present application further provides a storage medium which stores an executable program, and the executable program is executed by a processor to implement the data transmission method executed by the sending device.

An embodiment of the present application further provides a storage medium which stores an executable program, and the executable program is executed by a processor to implement the data transmission method executed by the receiving device.

An embodiment of the present application further provides a computer program product including a computer program instruction, the computer program instruction causes a computer to execute the data transmission method executed by the sending device.

An embodiment of the present application further provides a computer program product including a computer program instruction, the computer program instruction causes a computer to execute the data transmission method executed by the receiving device.

An embodiment of the present application further provides a computer program, the computer program causes a computer to execute the data transmission method executed by the sending device.

An embodiment of the present application further provides a computer program, the computer program causes a computer to execute the data transmission method executed by the receiving device.

FIG. 10 is a schematic hardware composition structural diagram of an electronic device (the sending device or the receiving device) provided by an embodiment of the present application. The electronic device 700 includes at least one processor 701, a memory 702 and at least one network interface 704. Various components in the electronic device 700 are coupled together by a bus system 705. It can be understood that the bus system 705 is configured to realize connection communication between these components. The bus system 705 also includes a power bus, a control bus and a status signal bus in addition to a data bus. However, for the sake of clarity, various buses are labeled as the bus system 705 in FIG. 10.

It can be understood that the memory 702 may be a volatile memory or a non-volatile memory, and may also include both the volatile and the non-volatile memory. The non-volatile memory may be an ROM, a programmable read-only memory (PROM), an erasable programmable read-only memory (EPROM), an electrically erasable programmable read-only memory (EEPROM), a ferromagnetic random access memory (FRAM), a flash memory, a magnetic surface memory, a compact disc, or a compact disc read-only memory (CD-ROM); the magnetic surface memory may be a disk memory or a tape memory. The volatile memory may be a random access memory (RAM), which is configured as an external cache. By way of example but not restrictive description, many forms of RAM are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), and a direct rambus random access memory (DRRAM). The memory 702 described in the embodiments of the present application is intended to include, but is not limited to, these and any other suitable types of memory.

In an embodiment of the present application, the memory 702 is configured to store various types of data to support an operation of the electronic device 700. Examples of the data include any computer program for operating on the electronic device 700, such as an application program 7022. A program for implementing the method of the embodiments of the present application may be included in the application program 7022.

The method disclosed in an embodiment of the present application may be applied to or implemented by the processor 701. The processor 701 may be an integrated circuit chip with signal processing capability. In the implementation process, each step of the above method may be completed by an integrated logic circuit of hardware or an instruction in the form of software in the processor 701. The processor 701 may be a general-purpose processor, a digital signal processor (DSP), or other programmable logic device, a discrete gate or a transistor logic device, a discrete hardware component, etc. The processor 701 may implement or execute the methods, steps and logic block diagrams disclosed in the embodiments of the present application. The general-purpose processor may be a microprocessor or any conventional processor. The steps of the method disclosed in the embodiments of the present application may be directly represented as the completion of a hardware decoding processor, or the completion of a combination of hardware and software modules in the decoding processor. The software module may be located in a storage medium, which is located in the memory 702. The processor 701 reads information in the memory 702 and completes the steps of the above method in combination with its hardware.

In an exemplary embodiment, the electronic device 700 may be implemented by one or more application specific integrated circuits (ASIC), DSP, a programmable logic device (PLD), a complex programmable logic device (CPLD), an FPGA, a general-purpose processor, a controller, an MCU, an MPU, or other electronic components to execute the above methods.

The present application is described with reference to flowcharts and/or block diagrams of the methods, the devices (systems), and the computer program products according to the embodiments of the present application. It should be understood that each flow and/or block in the flowcharts and/or the block diagrams and the combination of flow and/or block in the flowcharts and/or the block diagrams can be realized by computer program instructions. These computer program instructions may be provided to a processor of a general-purpose computer, a special-purpose computer, an embedded processor, or other programmable data processing device to generate a machine such that instructions executed by a processor of a computer or other programmable data processing device generate means for implementing functions specified in one or more flows in the flowcharts and/or one or more blocks in the block diagrams.

These computer program instructions may also be stored in a computer-readable memory that can guide a computer or other programmable data processing device to work in a specific way, so that the instructions stored in the computer-readable memory generate a manufacture including an instruction apparatus that implements the functions specified in one or more flows in the flowcharts and/or one or more blocks in the block diagrams.

These computer program instructions may also be loaded onto a computer or other programmable data processing device to cause a series of operating steps to be executed on the computer or other programmable device to generate a process implemented by the computer, so that the instructions executed on the computer or other programmable device provide steps for implementing the functions specified in one or more flows in the flowcharts and/or one or more blocks in the block diagrams.

It should be understood that the terms "system" and "network" in the present application are often used interchangeably herein. The term "and/or" in the present application is only an association relationship that describes the association object, indicating that there may be three kinds of relationships, for example, A and/or B, which may indicate that there are three situations: A exists alone, A and B exists together, and B exists alone. In addition, the character "/" in the present application generally indicates that the front and the back associated objects are in an "or" relationship.

## Claims

1. A data transmission method, comprising:
determining (S201), by a sending device, an available target identity set according to data to be sent and sidelink grant information, wherein the sidelink grant information comprises a time-frequency resource, and at least one target identity in the available target identity set is used for the sending device to generate data corresponding to the data to be sent;
wherein the available target identity set comprises at least one media access control control element or logical channel with a highest priority meeting a condition;
wherein the at least one target identity comprises an identity corresponding to a terminal device configured with DRX and in an active state at the time-frequency resource;
wherein the method further comprises:
reporting, by the sending device, a first message to a network if there is no available target identity set in the time-frequency resource configured by the sidelink grant information.

2. The method according to claim 1, wherein if the sidelink grant information is from a network, the first message is used to indicate that a sidelink grant resource configured by the network is unavailable and/or current target identities are in a DRX non-active state.

3. The method according to claim 1 or 2, wherein the first message is physical layer signaling or a media access control, MAC, control element, CE, or radio resource control, RRC, signaling.

4. The method according to any one of claims 1-3, wherein a profile corresponding to the data corresponding the data to be sent is determined by information of the data to be sent, and the profile is used to indicate a version of an available protocol.

5. The method according to claim 4, wherein the version of the protocol is used to indicate at least one of the following information:
the service corresponds to a terminal device configured with DRX;
the service corresponds to a terminal device not configured with DRX;
the service corresponds to a terminal device configured with DRX and a terminal device not configured with DRX;
a target identity corresponding to the service is an identity of a terminal device configured with DRX; and
a target identity corresponding to the service is an identity of a terminal device not configured with DRX.

6. The method according to any one of claims 1-5, wherein a receiving device corresponding to the at least one target identity is a DRX terminal device.

7. A sending device (500), comprising:
a processing unit (501), configured to determine an available target identity set according to data to be sent and sidelink grant information, wherein the sidelink grant information comprises a time-frequency resource, and at least one target identity in the available target identity set is used for the sending device to generate data corresponding to the data to be sent;
wherein the available target identity set comprises at least one media access control control element or logical channel with a highest priority meeting a condition;
wherein the at least one target identity comprises an identity corresponding to a terminal device configured with DRX and in an active state at the time-frequency resource;
the sending device (500) further comprises:
a sending unit (502), configured to report a first message to a network if there is no available target identity set in the time-frequency resource configured by the sidelink grant information.

8. The sending device according to claim 7, wherein the first message is physical layer signaling or a media access control, MAC, control element, CE, or radio resource control, RRC, signaling.

9. The sending device according to claim 7 or 8, wherein a profile corresponding to the data corresponding to the data to be sent is determined by information of the data to be sent, and the profile is used to indicate a version of an available protocol.

10. The sending device according to claim 9, wherein the version of the protocol is used to indicate at least one of the following information:
the service corresponds to a terminal device configured with DRX;
the service corresponds to a terminal device not configured with DRX;
the service corresponds to a terminal device configured with DRX and a terminal device not configured with DRX;
a target identity corresponding to the service is an identity of a terminal device configured with DRX; and
a target identity corresponding to the service is an identity of a terminal device not configured with DRX.

11. A storage medium storing an executable program, wherein the executable program is executed by a processor to implement the data transmission method of any one of claims 1-6.

## Patentansprüche

1. Datenübertragungsverfahren, umfassend:
Bestimmen (S201), durch eine Sendevorrichtung, eines verfügbaren Zielidentitätssatzes gemäß zu sendenden Daten und Sidelink-Gewährungsinformationen, wobei die Sidelink-Gewährungsinformationen eine Zeit-Frequenz-Ressource umfassen, und mindestens eine Zielidentität im verfügbaren Zielidentitätssatz für die Sendevorrichtung verwendet wird, um Daten entsprechend den zu sendenden Daten zu erzeugen;
wobei der verfügbare Zielidentitätssatz mindestens ein Medienzugangssteuerung-Steuerelement oder Logikkanal mit einer höchsten Priorität, der eine Bedingung erfüllt, umfasst;
wobei die mindestens eine Zielidentität eine Identität entsprechend einer Endgerätevorrichtung umfasst, die mit DRX konfiguriert ist und sich in einem aktiven Zustand bei der Zeit-Frequenz-Ressource befindet;
wobei das Verfahren ferner umfasst:
Melden, durch die Sendevorrichtung, einer ersten Nachricht an ein Netz, falls es keinen verfügbaren Zielidentitätssatz in der Zeit-Frequenz-Ressource gibt, die durch die Sidelink-Gewährungsinformationen konfiguriert wird.

2. Verfahren nach Anspruch 1, wobei, falls die Sidelink-Gewährungsinformationen von einem Netz stammen, die erste Nachricht verwendet wird, um anzugeben, dass eine Sidelink-Gewährungsressource, die durch das Netz konfiguriert wird, nicht verfügbar ist und/oder sich aktuelle Zielidentitäten in einem DRX-Nicht-Aktiv-Zustand befinden.

3. Verfahren nach Anspruch 1 oder 2, wobei die erste Nachricht eine Bitübertragungsschichtsignalisierung oder ein Medienzugangssteuerung-Steuerelement bzw. MAC-CE oder eine Funkressourcensteuerung- bzw. RRC-Signalisierung ist.

4. Verfahren nach einem der Ansprüche 1 bis 3, wobei ein Profil, das den Daten entsprechend den zu sendenden Daten entspricht, durch Informationen der zu sendenden Daten bestimmt wird, und das Profil verwendet wird, um eine Version eines verfügbaren Protokolls anzugeben.

5. Verfahren nach Anspruch 4, wobei die Version des Protokolls verwendet wird, um mindestens eine der folgenden Informationen anzugeben:
der Dienst entspricht einer Endgerätevorrichtung, die mit DRX konfiguriert ist;
der Dienst entspricht einer Endgerätevorrichtung, die nicht mit DRX konfiguriert ist;
der Dienst entspricht einer Endgerätevorrichtung, die mit DRX konfiguriert ist, und einer Endgerätevorrichtung, die nicht mit DRX konfiguriert ist;
eine Zielidentität entsprechend dem Dienst ist eine Identität einer Endgerätevorrichtung, die mit DRX konfiguriert ist; und
eine Zielidentität entsprechend dem Dienst ist eine Identität einer Endgerätevorrichtung, die nicht mit DRX konfiguriert ist.

6. Verfahren nach einem der Ansprüche 1 bis 5, wobei eine Empfangsvorrichtung entsprechend der mindestens einen Zielidentität eine DRX-Endgerätevorrichtung ist.

7. Sendevorrichtung (500), umfassend:
eine Verarbeitungseinheit (501), die ausgelegt ist zum Bestimmen eines verfügbaren Zielidentitätssatzes gemäß zu sendenden Daten und Sidelink-Gewährungsinformationen, wobei die Sidelink-Gewährungsinformationen eine Zeit-Frequenz-Ressource umfassen, und mindestens eine Zielidentität im verfügbaren Zielidentitätssatz für die Sendevorrichtung verwendet wird, um Daten entsprechend den zu sendenden Daten zu erzeugen;
wobei der verfügbare Zielidentitätssatz mindestens ein Medienzugangssteuerung-Steuerelement oder Logikkanal mit einer höchsten Priorität, der eine Bedingung erfüllt, umfasst;
wobei die mindestens eine Zielidentität eine Identität entsprechend einer Endgerätevorrichtung umfasst, die mit DRX konfiguriert ist und sich in einem aktiven Zustand bei der Zeit-Frequenz-Ressource befindet;
wobei die Sendevorrichtung (500) ferner umfasst:
eine Sendeeinheit (502), die ausgelegt ist zum Melden einer ersten Nachricht an ein Netz, falls es keinen verfügbaren Zielidentitätssatz in der Zeit-Frequenz-Ressource gibt, die durch die Sidelink-Gewährungsinformationen konfiguriert wird.

8. Sendevorrichtung nach Anspruch 7, wobei die erste Nachricht eine Bitübertragungsschichtsignalisierung oder ein Medienzugangssteuerung-Steuerelement bzw. MAC-CE oder eine Funkressourcensteuerung- bzw. RRC-Signalisierung ist.

9. Sendevorrichtung nach Anspruch 7 oder 8, wobei ein Profil, das den Daten entsprechend den zu sendenden Daten entspricht, durch Informationen der zu sendenden Daten bestimmt wird, und das Profil verwendet wird, um eine Version eines verfügbaren Protokolls anzugeben.

10. Sendevorrichtung nach Anspruch 9, wobei die Version des Protokolls verwendet wird, um mindestens eine der folgenden Informationen anzugeben:
der Dienst entspricht einer Endgerätevorrichtung, die mit DRX konfiguriert ist;
der Dienst entspricht einer Endgerätevorrichtung, die nicht mit DRX konfiguriert ist;
der Dienst entspricht einer Endgerätevorrichtung, die mit DRX konfiguriert ist, und einer Endgerätevorrichtung, die nicht mit DRX konfiguriert ist;
eine Zielidentität entsprechend dem Dienst ist eine Identität einer Endgerätevorrichtung, die mit DRX konfiguriert ist; und
eine Zielidentität entsprechend dem Dienst ist eine Identität einer Endgerätevorrichtung, die nicht mit DRX konfiguriert ist.

11. Speichermedium, das ein ausführbares Programm speichert, wobei das ausführbare Programm durch einen Prozessor ausgeführt wird, um das Datenübertragungsverfahren nach einem der Ansprüche 1 bis 6 zu implementieren.

## Revendications

1. Procédé de transmission de données, comprenant :
la détermination (S201), par un dispositif d'envoi, d'un ensemble d'identités cibles disponibles en fonction de données à envoyer et d'informations d'autorisation de liaison latérale, dans lequel les informations d'autorisation de liaison latérale comprennent une ressource temps-fréquence, et au moins une identité cible dans l'ensemble d'identités cibles disponibles est utilisée pour permettre au dispositif d'envoi de générer des données correspondant aux données à envoyer ;
dans lequel l'ensemble d'identités cibles disponibles comprend au moins un élément de contrôle de contrôle d'accès au support ou un canal logique avec une priorité la plus élevée satisfaisant une condition ;
dans lequel l'au moins une identité cible comprend une identité correspondant à un dispositif terminal configuré avec une DRX et dans un état actif au niveau de la ressource temps-fréquence ;
le procédé comprenant en outre :
le signalement, par le dispositif d'envoi, d'un premier message à un réseau s'il n'y a pas d'ensemble d'identités cibles disponibles dans la ressource temps-fréquence configurée par les informations d'autorisation de liaison latérale.

2. Procédé selon la revendication 1, dans lequel, si les informations d'autorisation de liaison latérale proviennent d'un réseau, le premier message est utilisé pour indiquer qu'une ressource d'autorisation de liaison latérale configurée par le réseau n'est pas disponible et/ou que des identités cibles actuelles sont dans un état non actif DRX.

3. Procédé selon la revendication 1 ou 2, dans lequel le premier message est une signalisation de couche physique ou un élément de contrôle, CE, de contrôle d'accès au support, MAC, ou une signalisation de contrôle de ressources radio, RRC.

4. Procédé selon l'une quelconque des revendications 1 à 3, dans lequel un profil correspondant aux données correspondant aux données à envoyer est déterminé par des informations des données à envoyer, et le profil est utilisé pour indiquer une version d'un protocole disponible.

5. Procédé selon la revendication 4, dans lequel la version du protocole est utilisée pour indiquer au moins l'une des informations suivantes :
le service correspond à un dispositif terminal configuré avec une DRX ;
le service correspond à un dispositif terminal non configuré avec une DRX ;
le service correspond à un dispositif terminal configuré avec une DRX et à un dispositif terminal non configuré avec une DRX ;
une identité cible correspondant au service est une identité d'un dispositif terminal configuré avec une DRX ; et
une identité cible correspondant au service est une identité d'un dispositif terminal non configuré avec une DRX.

6. Procédé selon l'une quelconque des revendications 1 à 5, dans lequel un dispositif de réception correspondant à l'au moins une identité cible est un dispositif terminal DRX.

7. Dispositif d'envoi (500), comprenant :
une unité de traitement (501), configurée pour déterminer un ensemble d'identités cibles disponibles en fonction de données à envoyer et d'informations d'autorisation de liaison latérale, dans lequel les informations d'autorisation de liaison latérale comprennent une ressource temps-fréquence, et au moins une identité cible dans l'ensemble d'identités cibles disponibles est utilisée pour permettre au dispositif d'envoi de générer des données correspondant aux données à envoyer ;
dans lequel l'ensemble d'identités cibles disponibles comprend au moins un élément de contrôle de contrôle d'accès au support ou un canal logique avec une priorité la plus élevée satisfaisant une condition ;
dans lequel l'au moins une identité cible comprend une identité correspondant à un dispositif terminal configuré avec une DRX et dans un état actif au niveau de la ressource temps-fréquence ;
le dispositif d'envoi (500) comprend en outre :
une unité d'envoi (502), configurée pour signaler un premier message à un réseau s'il n'y a pas d'ensemble d'identités cibles disponibles dans la ressource temps-fréquence configurée par les informations d'autorisation de liaison latérale.

8. Dispositif d'envoi selon la revendication 7, dans lequel le premier message est une signalisation de couche physique ou un élément de contrôle, CE, de contrôle d'accès au support, MAC, ou une signalisation de contrôle de ressources radio, RRC.

9. Dispositif d'envoi selon la revendication 7 ou 8, dans lequel un profil correspondant aux données correspondant aux données à envoyer est déterminé par des informations des données à envoyer, et le profil est utilisé pour indiquer une version d'un protocole disponible.

10. Dispositif d'envoi selon la revendication 9, dans lequel la version du protocole est utilisée pour indiquer au moins l'une des informations suivantes :
le service correspond à un dispositif terminal configuré avec une DRX ;
le service correspond à un dispositif terminal non configuré avec une DRX ;
le service correspond à un dispositif terminal configuré avec une DRX et à un dispositif terminal non configuré avec une DRX ;
une identité cible correspondant au service est une identité d'un dispositif terminal configuré avec une DRX ; et
une identité cible correspondant au service est une identité d'un dispositif terminal non configuré avec une DRX.

11. Support de stockage sur lequel est stocké un programme exécutable, dans lequel le programme exécutable est exécuté par un processeur pour mettre en œuvre le procédé de transmission de données selon l'une quelconque des revendications 1 à 6.
